# FASCICULE DE BREVET EUROPEEN

(11) **EP 3 019 907 B1**
(45) Date de publication et mention de la délivrance du brevet: **19.09.2018**
(21) Numéro de dépôt: 14745179.3
(22) Date de dépôt: 30.06.2014
(51) Int. Cl.: G02B 27/01, G02B 27/00, G06F 3/01, H04N 5/33, H04N 5/232

(54) **DISPOSITIF ET PROCÉDÉ DE DÉTECTION DE LA POSITION DU VISAGE D'UN INDIVIDU, NOTAMMENT D'UN CONDUCTEUR DE VÉHICULE AUTOMOBILE, AFFICHEUR COMPRENANT UN TEL DISPOSITIF**
VERFAHREN UND VORRICHTUNG ZUR ERFASSUNG DER POSITION EINER PERSON, INSBESONDERE EINES KRAFTFAHRZEUGFAHRERS, UND ANZEIGE MIT SOLCH EINER VORRICHTUNG
METHOD AND DEVICE FOR DETECTING THE POSITION OF THE FACE OF A PERSON, IN PARTICULAR OF A MOTOR VEHICLE DRIVER, AND DISPLAY INCLUDING SUCH A DEVICE

(30) Priorité: 12.07.2013 FR 1301656
(43) Date de publication de la demande: 18.05.2016
(73) Titulaire: Valeo Comfort and Driving Assistance, 94046 Créteil Cedex (FR)
(72) Inventeur: IRZYK, Michael, 94046 Créteil cedex (FR)
(74) Mandataire: Pothmann, Karsten
(86) Numéro de dépôt international: PCT/FR2014/000154
(87) Numéro de publication internationale: WO 2015/004338

(56) Documents cités:
- DE-A1- 19 822 850
- DE-A1-102010 040 694
- FR-A1- 2 725 101

## Description

L'invention concerne un système et un procédé de détection de la position du visage d'un individu, notamment d'un conducteur de véhicule automobile, ainsi qu'un afficheur, en particulier afficheur tête haute, comprenant un tel dispositif.

Il est connu d'équiper un véhicule automobile avec un système d'affichage tête haute.

Un tel système tête haute comprend de manière connue un dispositif de génération d'images, encore appelé imageur, qui produit une image réelle, et un système optique chargé de créer une image virtuelle à l'extérieur du véhicule dans le champ de vision du conducteur, à partir de cette image réelle. Les afficheurs connus présentent cependant l'inconvénient d'offrir un angle de vue de l'image projetée réduit, par exemple plus ou moins 3°. Il importe donc que l'image projetée soit correctement positionnée dans le champ de vision du conducteur pour être vue par celui-ci.

Par ailleurs, on sait que les véhicules sont généralement munis de moyens de réglage du poste de conduite laissant au conducteur une plage de manoeuvre plus grande concernant sa position, en particulier sa position verticale.

Il existe de la sorte un risque pour que le conducteur choisisse une position de confort dans laquelle il ne perçoit pas l'image projetée par l'afficheur.

Pour pallier cette difficulté, il a déjà été proposé d'ajuster la position de l'image projetée à la position du conducteur. Les solutions connues prévoient l'utilisation d'une caméra permettant l'acquisition d'une image du conducteur. On effectue alors un traitement de cette image pour déterminer la position verticale de sa tête. On règle en conséquence l'emplacement de l'image projetée.

Un afficheur de ce type est connu du document DE102010040694 A1. De telles solutions présentent cependant des inconvénients. Elle nécessite en particulier un éclairage du conducteur, de préférence à l'aide de lumière infrarouge.

L'invention est définie par la revendication 1. L'invention a pour objectif d'améliorer la situation et propose à cette fin un dispositif de détection de la position du visage d'un individu, notamment d'un conducteur de véhicule automobile, ledit dispositif comprenant :
- un capteur thermique configuré pour déterminer la chaleur émise en provenance d'une zone cible, susceptible d'être occupée par l'individu, sous la forme d'une matrice de points, chaque point de ladite matrice représentant la chaleur émise par une partie de ladite zone cible,
- des moyens de traitement permettant d'analyser une valeur prise par une grandeur physique pour les points de ladite matrice afin de déterminer au moins une information, dite de réglage, représentative de la position dudit visage à l'intérieur de ladite zone cible.

On établit de la sorte non plus une image de la scène mais une simple cartographie thermique. La température du visage d'un individu se distingue en effet de celle, différente, de son environnement. En identifiant la zone la plus chaude de la cartographie, on peut alors déduire par le positionnement de ladite zone dans la cartographie, l'information recherchée, à savoir la position du visage de l'individu. Avec une telle solution, on évite d'avoir à éclairer la scène.

Selon différents modes de réalisation de l'invention qui pourront être pris seuls ou en combinaison :
- ladite matrice comprend n lignes et m colonnes, définissant n x m points, n et/ou m étant strictement supérieurs à 1 et inférieurs ou égale à 128,
- n et/ou m sont égaux à 8 ou à 16,
- ledit capteur thermique est configuré pour être sensible aux radiations présentant une longueur d'onde dans l'infrarouge lointain,
- ledit capteur thermique est configuré pour être sensible aux radiations présentant une longueur d'onde comprise entre 2 et 22 micromètres, de préférence entre 2 et 12 micromètres,
- ledit capteur est une thermopile,
- ledit capteur comprend une lentille.

Avec de telles caractéristiques, en particulier avec un tel nombre limité de points, on comprend que les moyens à mettre en oeuvre, notamment les moyens de traitement, sont bien plus limités qu'avec des signaux vidéo classiques pour lesquels les images peuvent aller jusqu'à 640x480 points pour réussir à détecter un visage.

L'invention concerne également un afficheur, en particulier afficheur tête haute, ledit afficheur étant configuré pour afficher une image virtuelle à une hauteur donnée, dite hauteur d'affichage, ledit afficheur comprenant un dispositif de détection de la position du visage tel qu'évoqué plus haut.

Selon différents modes de réalisation de l'invention qui pourront être pris seuls ou en combinaison :
- ledit afficheur comprend des moyens permettant de modifier ladite hauteur d'affichage,
- lesdits moyens de traitement sont configurés pour actionner lesdits moyens permettant de modifier la hauteur d'affichage, en fonction de ladite information de réglage,

- ledit afficheur comprend un système optique permettant de transmettre des rayons destinés à l'affichage de ladite image virtuelle et lesdits moyens permettant de modifier la hauteur d'affichage comprennent au moins un composant, dit mobile, dudit système optique,
- ledit composant mobile est un miroir et/ou une lame semi-réfléchissante,
- ledit capteur thermique présente une résolution donnée et lesdits moyens de traitement sont configurés pour actionner ledit composant mobile lors d'une phase de détermination de ladite valeur de réglage, de manière à augmenter ladite résolution,
- ledit capteur thermique est positionné et ledit système optique est configuré pour que lesdits rayons suivent un chemin optique différent d'une trajectoire suivie par le rayonnement reçu par ledit capteur en provenance dudit individu,
- ledit afficheur comprend un élément optique permettant de modifier le chemin optique suivi par lesdits rayons en laissant inchangé une trajectoire suivie par le rayonnement reçu par ledit capteur en provenance dudit individu,
- ledit élément optique est un composant dudit système optique,
- ledit élément optique est ledit composant optique mobile,
- ledit élément optique est un miroir dichroïque,
- l'afficheur comprend un dispositif de génération d'image, notamment muni d'une ou plusieurs sources lumineuses du type laser.

L'invention concerne encore un procédé de détection de la position du visage d'un individu, notamment d'un conducteur de véhicule automobile, ledit procédé comprenant :
- une étape de détermination de la chaleur émise en provenance d'une zone cible, susceptible d'être occupée par l'individu, sous la forme d'une matrice de points, chaque point de ladite matrice représentant la chaleur émise par une partie de ladite zone cible,
- une étape d'analyse d'une valeur prise par une grandeur physique pour les points de ladite matrice afin de déterminer au moins une information, dite de réglage, représentative de la position dudit visage à l'intérieur de ladite zone cible.

Ledit procédé pourra en particulier être mis en oeuvre par le dispositif de détection décrit plus haut.

D'autres caractéristiques, détails et avantages de l'invention ressortiront plus clairement à la lecture de la description donnée ci-après à titre indicatif en relation avec des dessins dans lesquels :
- la figure 1 est une vue schématique d'un premier exemple d'afficheur tête haute muni d'un dispositif de détection, selon l'invention ;
- la figure 2 est une vue schématique d'un second exemple d'afficheur tête haute muni d'un dispositif de détection, selon l'invention ;
- la figure 3 est une vue schématique d'un troisième exemple d'afficheur tête haute muni d'un dispositif de détection, selon l'invention ;
- la figure 4 est une vue schématique d'un quatrième exemple d'afficheur tête haute muni d'un dispositif de détection, selon l'invention ;
- la figure 5 est une vue schématique d'un cinquième exemple d'afficheur tête haute muni d'un dispositif de détection, selon l'invention ;
- la figure 6 est une vue schématique d'une autre application d'un dispositif de détection, selon l'invention.

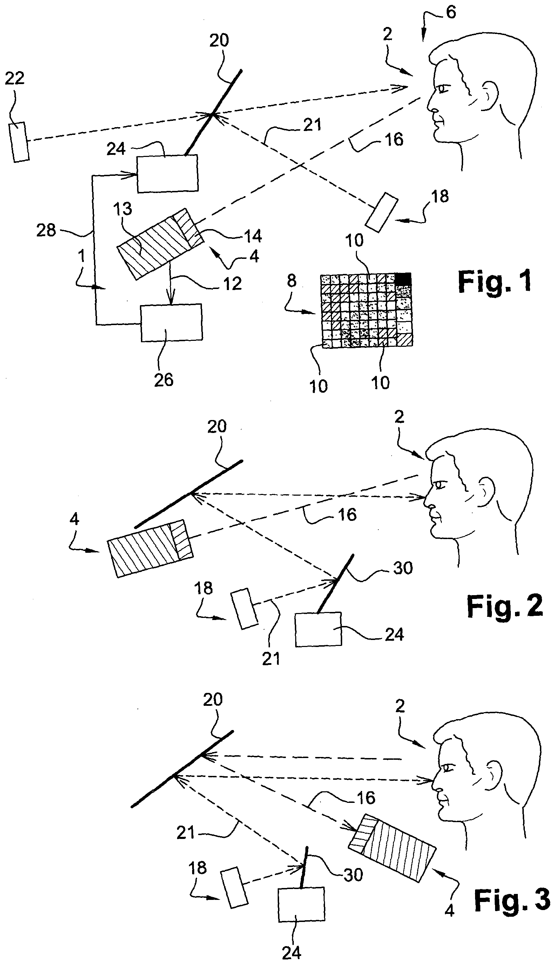

Comme illustré à la figure 1, l'invention concerne tout d'abord un dispositif 1 de détection de la position du visage 2 d'un individu, notamment d'un conducteur de véhicule automobile.

Ledit dispositif comprend un capteur thermique 4, configuré pour déterminer la chaleur émise en provenance d'une zone cible 6, susceptible d'être occupée par l'individu. Il s'agit, par exemple, d'une zone tenant compte des différences de taille et des différences de positionnement possibles pour l'individu, notamment en fonction de la plage de réglage du siège sur lequel il est assis dans le cas d'application à des conducteurs de véhicule.

Ledit capteur thermique matérialise l'information relevée sous la forme d'une matrice 8 de points 10, chaque point 10 de ladite matrice représentant la chaleur émise par une partie de ladite zone cible 6. Ici, on constate que les points se trouvant en bas au centre de la matrice sont ceux correspondant à la partie la plus chaude de ladite zone 6. Le visage 2 de l'utilisateur peut donc être considéré comme étant dans cette partie de la zone. Autrement dit, selon l'invention, on a réalisé une cartographie thermique de la zone 6. On dispose donc de la sorte de l'information recherchée sans avoir à éclairer la scène.

Cela étant, contrairement à ce que suggère la figure 1, ledit dispositif ne comprend pas nécessairement un support de visualisation de ladite matrice. Il suffit en effet qu'il comprenne des moyens de traitement permettant d'analyser une valeur prise par une grandeur physique pour les points 10 de ladite matrice 8. A titre d'exemple, ledit capteur 4 transforme l'information concernant la chaleur émise par chaque partie de la zone 6 correspondant à un point 10 donné de ladite matrice 8 sous la forme d'un courant électrique et c'est alors l'analyse de la valeur prise par ledit courant pour chaque point 10 qui est réalisée, notamment sous la forme d'une comparaison entre les différentes valeurs mesurées, pour en déduire les points 10 de la matrice caractéristiques de l'information recherchée, à savoir la position du visage.

Cette dernière étant établie, lesdits moyens de traitement permettent alors de déterminer au moins une information 12 représentative de la position dudit visage 2 à l'intérieur de ladite zone cible 6. Ladite information est appelée dans la suite information de réglage. En effet, comme développée plus loin, ladite information pourra en particulier servir au réglage de différents systèmes pour lesquels la position du visage est une information pertinente. Ladite information de réglage pourra aussi bien être de type analogique que numérique.

Si on appelle n le nombre de lignes et m le nombre de colonnes de la matrice 8, de sorte que ladite matrice 8 comporte n x m points 10, alors n et/ou m sont, par exemple, strictement supérieurs à 1 et inférieurs ou égale à 128. On dispose en effet avec de telles valeurs d'un compromis permettant de minimiser les moyens de calcul à mettre en oeuvre tout en bénéficiant d'une résolution suffisante pour la précision de positionnement désirée. A titre d'exemple avantageux, n et/ou m sont égaux à 8 ou à 16. Ladite matrice pourra donc, en particulier, présenter 64 ou 256 points 10.

Ledit capteur thermique 4 est configuré pour être sensible, par exemple, aux radiations présentant une longueur d'onde dans l'infrarouge lointain. En effet, il s'agit d'une gamme de radiations représentatives de la chaleur dégagée par un visage. Plus précisément, ledit capteur thermique 4 est configuré pour être sensible aux radiations présentant une longueur d'onde comprise entre 2 et 22 micromètres, de préférence entre 2 et 12 micromètres. Ledit capteur 4 est, par exemple, une thermopile.

Ledit capteur pourra comprendre un corps de mesure 13 et une lentille 14 transmettant le rayonnement incident 16 au corps de mesure 13. Lesdits moyens de traitement pourront être implantés dans ledit corps de mesure 13.

Comme illustré aux figures 1 à 5, ledit dispositif de détection pourra tout d'abord être appliqué à un afficheur, en particulier afficheur tête haute, notamment pour véhicule.

L'invention concerne ainsi également un afficheur configuré pour afficher une image virtuelle 22 à une hauteur donnée, dite hauteur d'affichage, ledit afficheur comprenant un dispositif 1 de détection de la position du visage tel que décrit plus haut.

Ledit afficheur comprend, par exemple, un dispositif de génération d'images 18 tel que, notamment, un écran à cristaux liquides ou un générateur d'images à balayage utilisant une source de lumineuse du type laser. Il pourra encore comprendre un système optique permettant de transmettre des rayons 21 destinés à l'affichage de ladite image virtuelle 22 au-delà du pare-brise. Ledit système optique comprend ici une lame semi-réfléchissante 20, aussi connue sous le nom de combiner.

Ledit afficheur comprend en outre des moyens 24 permettant de modifier ladite hauteur d'affichage. Il s'agit, par exemple, d'un actionneur mécanique jouant sur l'orientation des rayons 21 de transmission de ladite image, par l'intermédiaire d'un des composants, dits mobiles, dudit système optique de l'afficheur.

Lesdits moyens de traitement du dispositif de commande sont avantageusement configurés pour actionner lesdits moyens 24 permettant de modifier la hauteur d'affichage, en fonction de ladite information de réglage 12. Ledit afficheur comprend ici en ce sens une unité de traitement 26. Ladite unité de traitement 26 est configurée pour recevoir ladite information de réglage 12 et la transmettre auxdits moyens 24 permettant de modifier la hauteur de l'image, sous la forme d'un signal d'actionnement 28.

Ledit composant optique mobile est, par exemple, ladite lame semi-réfléchissante dont l'orientation est prévue modulable à l'aide des moyens 24 permettant de modifier ladite hauteur d'affichage.

Comme illustré aux figures 2 à 5, selon une variante, il pourra aussi s'agir d'un miroir 30 réfléchissant les rayons transmis entre le dispositif de génération d'images 18 et la lame semi-réfléchissante 20.

Selon le mode de réalisation des figures 1 et 2, ledit capteur thermique 4 est positionné et ledit système optique est configuré pour que lesdits rayons 21 suivent un chemin optique différent d'une trajectoire suivie par le rayonnement 16 reçu par ledit capteur en provenance dudit individu. A la figure 2, ledit capteur 4 est situé au pied de ladite semi-réfléchissante 20.

Selon le mode de réalisation des figures 3 à 5, lesdits rayons 21 et ledit rayonnement 16 suivent en partie le même trajet. Autrement dit, ledit capteur thermique 4 est positionné pour que le ou l'un ou des composants du système optique de l'afficheur servent à transmettre le rayonnement 16 audit capteur 4. En l'occurrence, il s'agit de ladite lame semi-réfléchissante 20.

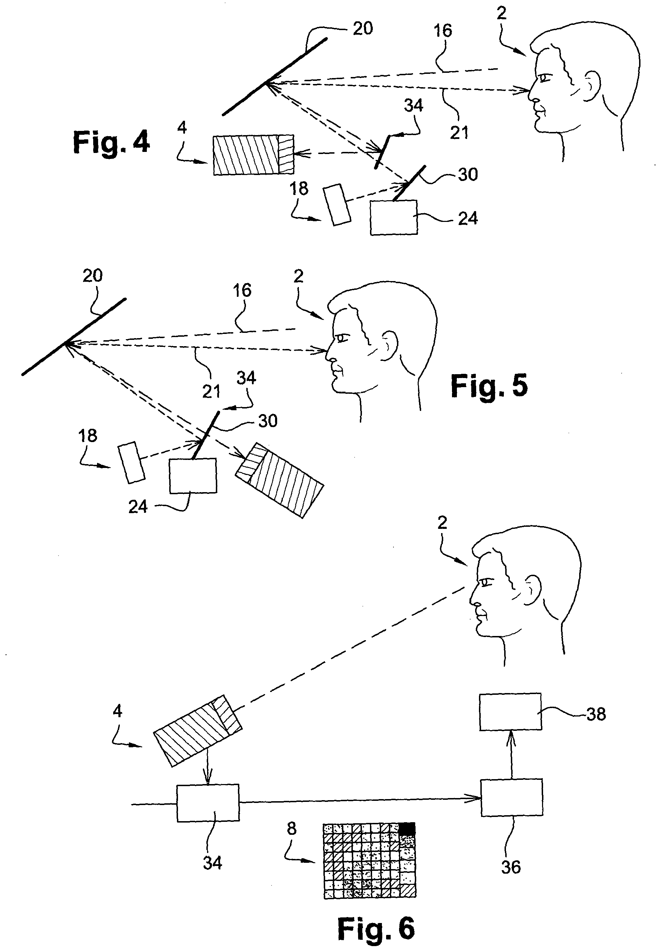

Aux figures 4 et 5, ledit afficheur comprend en outre un élément optique 34 permettant de modifier le chemin optique suivi par lesdits rayons 21 en laissant inchangé une trajectoire suivi par le rayonnement 16 reçu par ledit capteur en provenance dudit individu, ou inversement.

A la figure 4, ledit élément optique 34 est un composant supplémentaire. A la figure 5, il s'agit de l'un des composants dudit système optique, et plus précisément du composant optique mobile 30 qui pourra être ici un miroir dichroïque.

Cela étant, afin d'améliorer la résolution du capteur, lesdits moyens de traitement pourront être configurés pour actionner ledit composant mobile 20, 30 lors d'une phase de détermination de ladite valeur de réglage, de manière à augmenter ladite résolution. En effet, en se servant de la sorte d'un effet de balayage, on dispose de plusieurs matrices 8, chaque matrice correspondant à une position donnée du composant mobile 20, 30. On multiplie donc le nombre de points de mesure, sans avoir à disposer d'un capteur plus sophistiqué.

En variante, un même résultat d'augmentation de la résolution peut être obtenue en rendant mobile ledit capteur 4 lui-même ou l'élément optique 34. Dans la configuration de la figure 2, on remarque que la disposition choisie permet de se servir du même actionneur pour orienter ladite lame-semi-réfléchissante 20, par exemple pour son escamotage, et ledit capteur 4, compte-tenu de leur proximité.

Comme illustré à la figure 6, ledit dispositif de détection pourra aussi être appliqué à système de conditionnement d'air, en particulier pour véhicule.

Ledit système comprend de la sorte ledit capteur 4 et lesdits moyens de traitement, ici repérés par le bloc fonctionnel 34. Il comprend encore ici une unité de traitement 36 reliée à un composant 38 dudit système de conditionnement dont la position et/ou le fonctionnement dépend de la position de la hauteur de l'individu 2 placé dans l'habitacle climatisé par ledit système de conditionnement.

L'invention concerne encore un procédé de détection de la position du visage d'un individu 2, notamment d'un conducteur de véhicule automobile, correspondant en particulier à la mise en oeuvre du dispositif de détection décrit plus haut.

Ledit procédé comprend ainsi au moins :
- une étape de détermination de la chaleur émise en provenance d'une zone cible 6, susceptible d'être occupée par l'individu, sous la forme d'une matrice 8 de points 10, chaque point 10 de ladite matrice 8 représentant la chaleur émise par une partie de ladite zone cible 6,
- une étape d'analyse d'une valeur prise par une grandeur physique pour les points de ladite matrice afin de déterminer au moins une information, dite de réglage, représentative de la position dudit visage à l'intérieur de ladite zone cible.

## Revendications

1. Afficheur, en particulier afficheur tête haute, ledit afficheur étant configuré pour afficher une image virtuelle (22) à une hauteur donnée, dite hauteur d'affichage, ledit afficheur comprenant un dispositif (1) de détection de la position du visage (2) d'un individu, ledit dispositif comprenant :
- un capteur thermique (4) configuré pour déterminer la chaleur émise en provenance d'une zone cible (6), susceptible d'être occupée par l'individu, sous la forme d'une matrice (8) de points (10), chaque point (10) de ladite matrice (8) représentant la chaleur émise par une partie de ladite zone cible (6),
- des moyens de traitement permettant d'analyser une valeur prise par une grandeur physique pour les points (10) de ladite matrice (8) afin de déterminer au moins une information (12), dite de réglage, représentative de la position dudit visage (2) à l'intérieur de ladite zone cible (6) **caractérisé en ce que**
- le capteur thermique (4) présente une résolution donnée et lesdits moyens de traitement sont configurés pour actionner un composant mobile (20, 30, 4, 34) lors d'une phase de détermination de ladite valeur de réglage, de manière à augmenter ladite résolution.

2. Afficheur selon la revendication 1 comprenant des moyens (24) permettant de modifier ladite hauteur d'affichage.

3. Afficheur selon la revendication 2 dans lequel lesdits moyens de traitement sont configurés pour actionner lesdits moyens (24) permettant de modifier la hauteur d'affichage, en fonction de ladite information de réglage (12).

4. Afficheur selon l'une quelconques des revendications 2 ou 3 comprenant un système optique permettant de transmettre des rayons (21) destinés à l'affichage de ladite image virtuelle (22) et dans lequel lesdits moyens (24) permettant de modifier la hauteur d'affichage comprennent au moins le composant (20, 30, 4, 34), dit mobile, dudit système optique.

5. Afficheur selon la revendication 4 dans lequel ledit composant mobile est un miroir (30) et/ou une lame semi-réfléchissante (20).

6. Afficheur selon la revendication 1 dans lequel ledit composant mobile est le capteur (4) ou l'élément optique (34).

7. Afficheur selon l'une quelconque des revendications 4 à 6 dans lequel ledit capteur thermique (4) est positionné et ledit système optique est configuré pour que lesdits rayons (21) suivent un chemin optique différent d'une trajectoire suivie par le rayonnement (16) reçu par ledit capteur en provenance dudit individu.

8. Afficheur selon l'une quelconque des revendications 4 à 6 comprenant un élément optique (34) permettant de modifier le chemin optique suivie par lesdits rayons (21) en laissant inchangé une trajectoire suivi par le rayonnement (16) reçu par ledit capteur en provenance dudit individu.

9. Afficheur selon l'une quelconque des revendications précédentes dans lequel ladite matrice (8) comprend n lignes et m colonnes, définissant n x m points (10), n et/ou m étant strictement supérieurs à 1 et inférieurs ou égale à 128.

10. Afficheur selon la revendication 9 dans lequel n et/ou m sont égaux à 8 ou à 16.

11. Afficheur selon l'une quelconque des revendications précédentes dans lequel ledit capteur thermique (4) est configuré pour être sensible aux radiations présentant une longueur d'onde dans l'infrarouge lointain.

12. Afficheur selon l'une quelconque des revendications précédentes dans lequel ledit capteur thermique (4) est configuré pour être sensible aux radiations présentant une longueur d'onde comprise entre 2 et 22 micromètres.

13. Afficheur selon l'une quelconque des revendications précédentes dans lequel ledit capteur (4) est une thermopile.

## Patentansprüche

1. Display, insbesondere Head-up-Display, wobei das Display konfiguriert ist, ein virtuelles Bild (22) auf einer gegebenen Höhe, Anzeigehöhe genannt, anzuzeigen, wobei das Display eine Vorrichtung (1) zur Erfassung der Position des Gesichts (2) einer Person enthält,
wobei die Vorrichtung enthält:
- einen Wärmesensor (4), der konfiguriert ist, die von einem Zielbereich (6), der von der Person besetzt sein kann, emittierte Wärme in Form einer Matrix (8) von Punkten (10) zu bestimmen, wobei jeder Punkt (10) der Matrix (8) die von einem Teil des Zielbereichs (6) emittierte Wärme darstellt,
- Verarbeitungseinrichtungen, die es ermöglichen, einen von einer physikalischen Größe für die Punkte (10) der Matrix (8) angenommenen Wert zu analysieren, um mindestens eine so genannte Einstellinformation (12) zu bestimmen, die für die Position des Gesichts (2) im Inneren des Zielbereichs (6) repräsentativ ist,
**dadurch gekennzeichnet, dass**
- der Wärmesensor (4) eine gegebene Auflösung aufweist und die Verarbeitungseinrichtungen konfiguriert sind, ein bewegliches Bauteil (20, 30, 4, 34) in einer Phase der Bestimmung des Einstellwerts zu betätigen, um die Auflösung zu erhöhen.

2. Display nach Anspruch 1, das Einrichtungen (24) enthält, die es ermöglichen, die Anzeigehöhe zu verändern.

3. Display nach Anspruch 2, wobei die Verarbeitungseinrichtungen konfiguriert sind, die Einrichtungen (24), die es ermöglichen, die Anzeigehöhe zu verändern, abhängig von der Einstellinformation (12) zu betätigen.

4. Display nach nach einem der Ansprüche 2 oder 3, das ein optisches System enthält, welches es ermöglicht, Strahlen (21) zu übertragen, die zur Anzeige des virtuellen Bilds (22) bestimmt sind, und wobei die Einrichtungen (24), die es ermöglichen, die Anzeigehöhe zu verändern, mindestens das so genannte bewegliche Bauteil (20, 30, 4, 34) des optischen Systems enthalten.

5. Display nach Anspruch 4, wobei das bewegliche Bauteil ein Spiegel (30) und/oder eine halbreflektierende Lamelle (20) ist.

6. Display nach Anspruch 1, wobei das bewegliche Bauteil der Sensor (4) oder das optische Element (34) ist.

7. Display nach einem der Ansprüche 4 bis 6, wobei der Wärmesensor (4) so positioniert und das optische System so konfiguriert wird, dass die Strahlen (21) einem optischen Pfad folgen, der sich von einer Bahn unterscheidet, der die vom Sensor empfangene, von der Person kommende Strahlung (16) folgt.

8. Display nach einem der Ansprüche 4 bis 6, das ein optisches Element (34) enthält, das es ermöglicht, den von den Strahlen (21) verfolgten optischen Pfad zu verändern, während eine von der vom Sensor empfangenen, von der Person kommenden Strahlung (16) verfolgte Bahn unverändert gelassen wird.

9. Display nach einem der vorhergehenden Ansprüche, wobei die Matrix (8) n Zeilen und m Spalten enthält, die n x m Punkte (10) definieren, wobei n und/oder m strikt größer als 1 und niedriger als oder gleich 128 sind.

10. Display nach Anspruch 9, wobei n und/oder m gleich 8 oder 16 sind.

11. Display nach einem der vorhergehenden Ansprüche, wobei der Wärmesensor (4) konfiguriert ist, auf die Strahlungen anzusprechen, die eine Wellenlänge im fernen Infrarotbereich aufweisen.

12. Display nach einem der vorhergehenden Ansprüche, wobei der Wärmesensor (4) konfiguriert ist, auf die Strahlungen anzusprechen, die eine Wellenlänge zwischen 2 und 22 Mikrometer aufweisen.

13. Display nach einem der vorhergehenden Ansprüche, wobei der Sensor (4) eine Thermosäule ist.

## Claims

1. Display, in particular a head-up display, said display being configured for displaying a virtual image (22) at a given height, known as the display height, said display comprising a device (1) for detecting the position of the face (2) of an individual,
said device comprising:
- a thermal sensor (4) configured for determining the heat emitted from a target area (6), likely to be occupied by the individual, in the form of a matrix (8) of points (10), each point (10) of said matrix (8) representing the heat emitted by a portion of said target area (6),
- processing means for analysing a value acquired via a physical quantity for the points (10) of said matrix (8) in order to determine at least one piece of "adjustment" information (12) representative of the position of said face (2) within said target area (6) **characterized in that**
- the thermal sensor (4) has a given resolution and said processing means are configured for actuating a movable component (20, 30, 4, 34) during a phase of determining said adjustment value, so as to increase said resolution.

2. Display according to Claim 1, comprising means (24) for modifying said display height.

3. Display according to Claim 2, in which said processing means are configured for actuating said means (24) for modifying the display height, according to said piece of adjustment information (12).

4. Display according to either one of Claims 2 and 3, comprising an optical system for transmitting rays (21) intended for the display of said virtual image (22) and in which said means (24) for modifying the display height comprise at least the "movable" component (20, 30, 4, 34) of said optical system.

5. Display according to Claim 4, in which said movable component is a mirror (30) and/or a semi-reflecting plate (20).

6. Display according to Claim 1, in which said movable component is the sensor (4) or the optical element (34).

7. Display according to any one of Claims 4 to 6, in which said thermal sensor (4) is positioned and said optical system is configured so that said rays (21) follow a different optical path from a trajectory followed by the radiation (16) received by said sensor from said individual.

8. Display according to any one of Claims 4 to 6, comprising an optical element (34) for modifying the optical path followed by said rays (21) while leaving unchanged a trajectory followed by the radiation (16) received by said sensor from said individual.

9. Display according to any one of the preceding claims, in which said matrix (8) comprises n rows and m columns, defining n x m points (10), n and/or m being strictly greater than 1 and less than or equal to 128.

10. Display according to Claim 9, in which n and/or m are equal to 8 or 16.

11. Display according to any one of the preceding claims, in which said thermal sensor (4) is configured for being sensitive to radiation having a wavelength in the far infrared.

12. Display according to any one of the preceding claims, in which said thermal sensor (4) is configured for being sensitive to radiation having a wavelength of between 2 and 22 micrometres.

13. Display according to any one of the preceding claims in which said sensor (4) is a thermopile.
